# EUROPÄISCHE PATENTSCHRIFT

(11) **EP 0 673 515 B1**
(45) Veröffentlichungstag und Bekanntmachung des Hinweises auf die Patenterteilung: **03.09.1997**
(21) Anmeldenummer: 94902756.9
(22) Anmeldetag: 10.12.1993
(51) Int. Cl.: G02C 9/00

(54) **AUFSTECKBARER BRILLENVORHÄNGER**
CLIP-ON SPECTACLE LENSES
VERRES SUPPLEMENTAIRES AMOVIBLES DE LUNETTES

(30) Priorität: 11.12.1992 DE 9216919 U
(43) Veröffentlichungstag der Anmeldung: 27.09.1995
(73) Patentinhaber: GANDL-SCHILLER, Elisabeth, D-81675 München (DE)
(72) Erfinder: GANDL-SCHILLER, Elisabeth, D-81675 München (DE)
(74) Vertreter: Bardehle, Heinz, Dipl.-Ing.
(86) Internationale Anmeldenummer: EP9303496
(87) Internationale Veröffentlichungsnummer: WO9414101

(56) Entgegenhaltungen:
- DE-U- 8 914 048
- FR-A- 2 681 441
- GB-A- 690 493
- GB-A- 731 192
- US-A- 2 678 584
- US-A- 2 949 609
- US-A- 3 183 523
- US-A- 4 119 369
- US-A- 5 123 724

## Beschreibung

Die Erfindung bezieht sich auf einen aufsteckbaren Brillenvorhänger mit randlosen Aufsteckgläsern, die je durch mehrere Klammern am Brillenglas gehalten sind, wobei pro Aufsteckglas direkt an dessen oberen Rand eine obere Klammer befestigt ist, die gleichzeitig die Halterung für eine elastische Brücke zum anderen Aufsteckglas derart bildet, daß über die oberen Klammern und die Brücke der seitliche Zusammenhalt der beiden Aufsteckgläser bestimmt ist, und direkt am unteren Rand jedes Aufsteckglases eine untere Klammer befestigt ist, die ein Abspreizen des Brillenvorhängers von den Brillengläsern verhindert, wobei jeweils die obere und die untere Klammer eines Aufsteckglases nach außen gegen die Mittellinie des Aufsteckglases versetzt sind.

Ein solcher Brillenvorhänger ist aus der US-A-5,123,724 bekannt. Bei diesem Brillenvorhänger werden die Klammern aus Überschiebern gebildet, die U-förmig gestaltet sind und das jeweilige Aufsteckglas von seinen beiden Seiten umfassen. Dabei bilden die Überschieber zwischen ihrem Grund und dem betreffenden Rand des Aufsteckglases einen Zwischenraum, in den eine aus einem rechteckigen, elastischen Stab gebildete Brücke eingeschoben und in dem Zwischenraum bei der Anpassung des Brillenvorhängers an die Brille eines Brillenträgers festgeklebt ist. Der rechteckige elastische Stab füllt dabei den ebenfalls praktisch rechteckig ausgebildeten Zwischenraum soweit aus, daß nur noch wenig Platz von dem Klebstoff ausgefüllt werden muß und die Brücke daher gegen Verdrehung in dem Zwischenraum gesichert ist. Aufgrund der lichten Weite zwischen den Schenkeln des U-förmigen Überschiebers ist eine entsprechende Dicke des betreffenden Aufsteckglases erforderlich, das möglichst satt in den Überschieber einsteckbar sein muß, damit seine solide Befestigung in dem Überschieber gewährleistet ist. Auf keinen Fall erlaubt der U-förmig ausgebildete Überschieber das nachträgliche Einsetzen eines gegenüber seiner lichten Weite dickeren Aufsteckglases. Das Einbringen des Klebstoffs in den oben genannten Zwischenraum erfordert jeweils eine genaue Portionierung unter Vermeidung von Verschmieren des Klebstoffs über die Ränder des Zwischenraumes hinaus und auf das Aufsteckglas, was bei den geringen Dimensionen der betreffenden Bauteile kaum bewerkstelligt werden kann, auf jeden Fall eine ganz erhebliche Sorgfalt und Genauigkeit erfordert, die im allgemeinen für eine schnelle und problemlose Anpassung ein erhebliches Erschwernis darstellt, abgesehen von dem Problem eines nachträglichen Verrutschens der zu verbindenden Teile während des Aushärtevorgangs des Klebstoffs. Darüber hinaus erschwert der die Brücke bildende rechteckige Stab dessen notwendiges Verbiegen bei der Anpassung des Brillenvorhängers an eine gegebene Brille, da die Brücke dabei gegebenenfalls in Richtungen gebogen werden muß, die annähernd diagonal zu dem rechteckigen Querschnitt des Stabes verlaufen, wogegen sich der rechteckige Querschnitt des Stabes sträubt. Eine schnelle und unproblematische Anpassung des Brillenvorhängers und gegebenenfalls eine schnelle Auswechslung der Aufsteckgläser ist also bei dem bekannten Brillenvorhänger nicht möglich.

Ein auf dem Markt befindlicher Brillenvorhänger besitzt für jedes Aufsteckglas einen Metallrahmen, an dem pro Aufsteckglas außen außerhalb der Mittellinie des jeweiligen Aufsteckglases zwei Klammern befestigt sind, mit denen der Brillenvorhänger an den Brillengläsern angehängt wird. Die beiden Aufsteckgläser sind über eine aus Draht gebildete Brücke miteinander verbunden, die jeweils in einem separat an dem Rahmen des jeweiligen Aufsteckglases befestigten Röhrchen endet.

Es ist weiterhin aus dem DE-U 89 14 048 bekannt, einzelne Aufsteckgläser vorzusehen, die bei rahmenloser Ausbildung jeweils drei Klammern aufweisen, mit denen jeweils ein Aufsteckglas an einem Brillenglas aufgehängt wird. Eine Verbindung zwischen den beiden Aufsteckgläsern für eine Brille ist nicht vorgesehen. Die drei Klammern sind an dem Aufsteckglas entweder mittels das Aufsteckglas durchsetzender Stifte befestigt oder an dem Aufsteckglas angeklebt.

Der Erfindung liegt die Aufgabe zugrunde, einen aufsteckbaren Brillenvorhänger zu schaffen, der besonders einfach herzustellen ist und sich aus vorgefertigten Einzelteilen je nach der betreffenden Brille ohne großen Aufwand zusammensetzen läßt und auch eine spätere Auswechslung gegen unterschiedliche Aufsteckgläser gestattet.

Erfindungsgemäß geschieht dies dadurch, daß die Brücke aus einem elastischen Metall draht gebildet ist, und mit ihren Enden jeweils in einer Halterung auf dem oberen Rand der betreffenden Klammer endet.

Aufgrund des über die Halterung mit der betreffenden Klammer verbundenen Metalldrahtes ergibt sich einerseits ein für den Optiker vorgefertigtes Bauteil in Form der Brücke und der beiden an seinen Enden befestigten Klammern, so daß für die Anpassung an eine Brille ein fertiges Bauteil vorliegt. Es ist dabei lediglich dafür zu sorgen, daß für verschiedene Brillentypen mehrere Baugruppen bestehend aus Brücke und Klammern zur Verfügung stehen. Für die üblichen im Handel befindlichen Brillen genügen drei verschiedene Größen dieser Baugruppe. Bei der Anpassung kann dann keinerlei Problem hinsichtlich irgendeiner Verschmutzung der anzubringenden Aufsteckgläser entstehen. Der elastische Metalldraht bietet wegen seines von Hause aus runden Querschnitts dabei in allen Querrichtungen gleiche Flexibilität, so daß der Brillenvorhänger mit den an den Klammern angebrachten Aufsteckgläsern in einfacher Weise an praktisch jede Brille anpaßbar ist. Die Anbringung der Halterung für die Enden des Metalldrahtes am oberen Rand der betreffenden Klammer bietet einen sicheren und formschönen Übergang in die Klammer.

Zweckmäßig gestaltet man die Halterung als Lötverbindung.

Zweckmäßig gestaltet man die Klammern als einseitig an den Aufsteckgläsern anliegende Auflagen, an denen die Aufsteckgläser befestigt sind. Aufgrund der einseitigen Anlage können Aufsteckgläser praktisch beliebiger Stärke an den Anlagen befestigt werden. Insbesondere ist auch eine spätere Auswechslung von Aufsteckgläsern insbesondere gegenüber stärkeren Aufsteckgläsern möglich.

Der erfindungsgemäße Brillenvorhänger kommt pro Aufsteckglas mit nur zwei Klammern aus, von denen die jeweils obere Klammer zusätzlich die Halterung für die aus elastischem Metalldraht ausgebildete Brücke bildet. Für das Anbringen der beiden Klammern an einem Aufsteckglas sind daher nur zwei Befestigungsstellen erforderlich, in die auch die Befestigung der Brücke einbezogen ist. Aufgrund der Anordnung der einen Klammer am oberen Rand eines Aufsteckglases ergibt sich eine von Aufsteckglas zu Aufsteckglas übergreifende, formschön anzubringende Brücke, wobei die untere zweite Klammer dafür sorgt, daß die Aufsteckgläser des Brillenvorhängers nicht von der Brille abgespreizt werden können. Durch die nach außen gegen die Mittellinie des Aufsteckglases versetzte Anordnung der beiden Klammern pro Aufsteckglas ergibt sich unter Einbeziehung der Brücke ein sicherer Zusammenhalt des Brillenvorhängers, der nach seiner Anbringung von der betreffenden Brille nicht abfallen kann und zu seiner Abnahme eines Auffederns der Brücke bedarf.

Für die Befestigung der Klammer gibt es verschiedene Möglichkeiten. Einerseits kann man die Klammern so gestalten, daß diese mit rückwärtiger Auflage an den Aufsteckgläsern anliegen. Es ist aber auch möglich, die Klammern mit an der Vorderseite der Aufsteckgläser angeordneten Auflagen zu versehen. Die Auflagen kann man z. B. durch Schrauben, Nieten und durch Ankleben an den Aufsteckgläsern befestigen, wobei Schrauben eine spätere Auswechslung besonders erleichtern.

Die Aufnahmen für die aus Metalldraht ausgebildete Brücke kann man als oberhalb der Ränder der Aufsteckgläser angebrachte Röhrchen gestalten, die an den oberen Klammern befestigt, vorzugsweise angelötet sind.

Um die Beschädigungen der betreffenden Brille bzw. ihres Rahmens zu vermeiden, kann man die Klammern zweckmäßig mit einwärts gebogenen Bügeln versehen, die mit einem Kunststoffschlauch überzogen sind.

Die Brücke gestaltet man zweckmäßig als bogenförmige Verbindung, womit der Brücke im Zusammenhang mit den Aufsteckgläsern ein besonders gefälliges Aussehen gegeben wird.

In den Figuren sind Ausführungsbeispiele der Erfindung dargestellt. Es zeigen:
- Figur 1: einen Brillenvorhänger mit rückwärtigen Auflagen der Klammern, die mit Schrauben an den Aufsteckgläsern befestigt sind,
- Figur 2: eine vergrößerte Seitensicht einer oberen Klammer gemäß Figur 1,
- Figur 3: eine vergrößerte Seitensicht einer ähnlichen Klammer, die an der rückwärtigen Seite eines Aufsteckglases angeklebt ist,
- Figur 4: eine vergrößerte Seitensicht einer oberen Klammer mit einer an der Vorderseite des Aufsteckglases anliegenden Auflage und einer Befestigungsschraube,
- Figur 5: eine vergrößerte Seitensicht einer unteren Klammer.

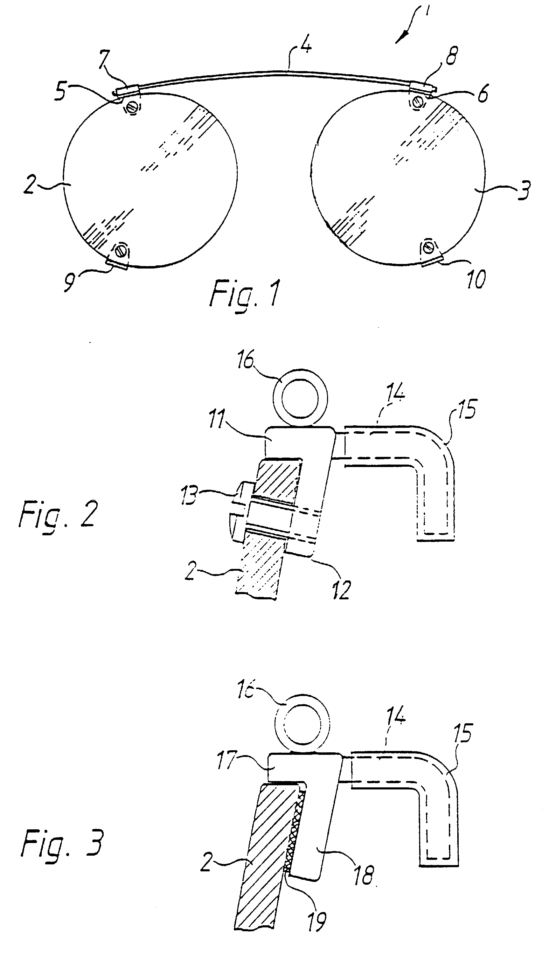

In der Figur 1 ist ein aufsteckbarer Brillenvorhänger 1 dargestellt, der die beiden Aufsteckgläser 2 und 3 aufweist, die über die Brücke 4 miteinander verbunden sind. Die Brücke 4 besteht aus einem elastischen Metalldraht, der mit seinen beiden Enden an den oberen Klammern 5 und 6 endet. An den Klammern 5 und 6 sind die beiden Röhrchen 7 und 8 angelötet, in die die Enden der Brücke eingeschoben und darin verlötet sind. Außer den beiden Klammern 5 und 6 weist der Brillenvorhänger 1 noch die beiden unteren Klammern 9 und 10 auf. Jedes Aufsteckglas 2 und 3 wird also an einer passenden Brille mittels jeweils zwei Klammern 5/6 und 9/10 gehalten. Die Klammern 5, 6, 9 und 10 sind hier mittels Schrauben an den Aufsteckgläsern 2 und 3 befestigt, die die Aufsteckgläser durchsetzten.

Die beiden Klammern 5 und 6 bzw. 9 und 10 sind so angeordnet, daß sie unter Berücksichtigung der Länge der Brücke 4 die betreffenden Brillengläser von deren äußeren Bereich her erfassen, wozu jeweils die obere (5/6) und die untere (9/10) Klammer eines Aufsteckglases 2 bzw. 3 nach außen gegen die Mittellinie des betreffenden Aufsteckglases versetzt ist. Auf diese Weise ergibt sich über die Brücke 4 ein sicherer leicht federnder Zusammenhalt der beiden Aufsteckgläser 2 und 3, die somit sicher an den betreffenden Brillengläsern gehalten sind und sich von diesen auch nicht abspreizen können.

In Figur 2 ist in vergrößerter Seitensicht die Klammer 11 dargestellt, die der Klammer 5 in Figur 1 entspricht. Die Klammer 11 umfaßt den oberen Rand des Aufsteckglases 2 und geht in die rückwärtige Auflage 12 über, in der die Schraube 13 endet. Die Schraube 13 ist von der Vorderseite des Aufsteckglases 2 her in die Auflage 12 eingeschraubt. Zur Befestigung der Klammer 11 an dem Aufsteckglas 2 ist dieses also mit einer entsprechenden Bohrung zu versehen. Aus der Klammer 11 wächst der Bügel 14 heraus, der über ein nicht dargestelltes Brillenglas geschoben wird und sich an diesem festhält. Zur Vermeidung von Beschädigungen des Brillenglases oder dessen Randes ist der Bügel 14 mit einem Kunststoffschlauch 15 überzogen. An der Klammer 11 ist weiterhin das Röhrchen 16 angelötet, das zur Aufnahme der Brücke 4 gemäß Figur 1 dient.

Figur 3 zeigt eine der Anordnung gemäß Figur 2 ähnliche Gestaltung einer Klammer 17, die hier in der rückwärtigen Auflage 18 endet. Die Auflage 18 ist mittels der Klebstoffschicht 19 an der Rückseite des Aufsteckglases 2 befestigt. Ansonsten entspricht die Klammer 17 derjenigen gemäß Figur 2.

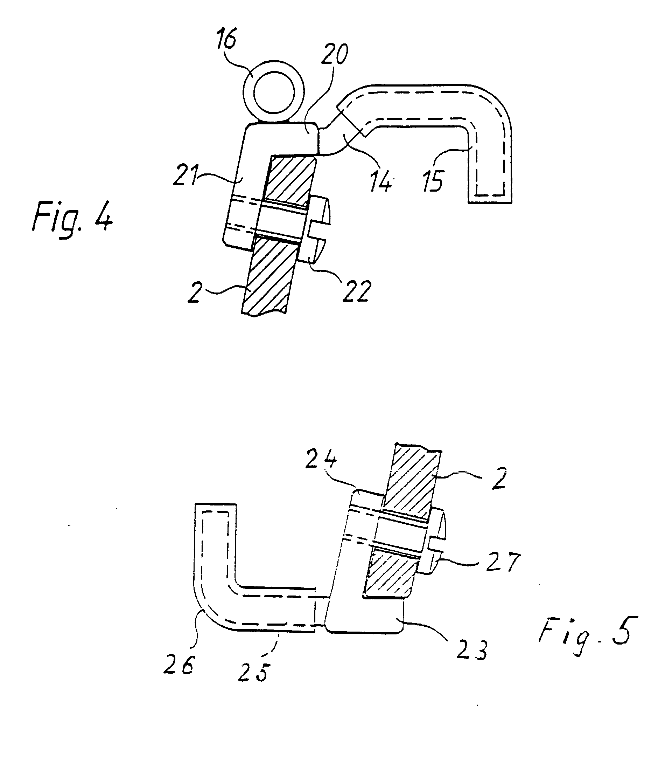

Figur 4 zeigt eine Ausführungsform einer Klammer 20, die in einer vorderseitigen Auflage 21 endet. Hier ist die Schraube 22 von der Rückseite des Aufsteckglases 2 in dieses eingesetzt und in der Auflage 21 festgeschraubt. In gleicher Weise kann natürlich ähnlich der Anordnung gemäß Figur 3 eine Verklebung mit dem Aufsteckglas 2 erfolgen. Wie bei den in Figur 2 und 3 dargestellten Ausführungsbeispielen ist die Klammer 20 mit dem Bügel 14 versehen, der von dem Kunststoffschlauch 15 überzogen ist.

Figur 5 zeigt die untere Klammer 23, die entsprechend der in Figur 2 dargestellten oberen Klammer ausgebildet ist, allerdings ohne ein Röhrchen. Die Klammer 23 geht in die Auflage 24 über, die hier an der Vorderseite des Aufsteckglases 2 anliegt. Die untere Klammer 23 ergänzt also die in Figur 4 dargestellte obere Klammer 20. Die untere Klammer 23 weist den Bügel 25 mit dem Kunststoffschlauch 26 auf. Sie ist mittels der Schraube 27 an dem Aufsteckglas 2 befestigt.

Es sei noch darauf hingewiesen, daß der aufsteckbare Brillenvorhänger sich besonders dazu eignet, als Bausatz, bestehend aus den vorstehend erläuterten Einzelteilen, dem Optiker zur Verfügung gestellt zu werden, der dann aus einem solchen Bausatz mit wenigen Handgriffen den Brillenvorhänger für eine vorhandene Brille zusammenstellen und anpassen kann.

## Patentansprüche

1. Aufsteckbarer Brillenvorhänger (1) mit randlosen Aufsteckgläsern (2, 3), die je durch mehrere Klammern am Brillenglas gehalten sind, wobei pro Aufsteckglas (2, 3) direkt an dessen oberen Rand eine obere Klammer (5, 6, 11, 17, 20) befestigt ist, die gleichzeitig die Halterung für eine elastische Brücke (4) zum anderen Aufsteckglas (2, 3) derart bildet, daß über die oberen Klammern (5, 6, 11, 17, 20) und die Brücke (4) der seitliche Zusammenhalt der beiden Aufsteckgläser (2, 3) bestimmt ist, und direkt am unteren Rand jedes Aufsteckglases (2, 3) eine untere Klammer (9, 10) befestigt ist, die ein Abspreizen des Brillenvorhängers von den Brillengläsern (2, 3) verhindert, wobei jeweils die obere (5, 6, 11, 17, 20) und die untere Klammer (9, 10) eines Aufsteckglases (2, 3) nach außen gegen die Mittellinie des Aufsteckglases (2, 3) versetzt sind, **dadurch gekennzeichnet**, daß die Brücke (4) aus einem elastischen Metall draht gebildet ist, und mit ihren Enden jeweils in einer Halterung auf dem oberen Rand der betreffenden Klammer (5,6,11,17,20) endet.

2. Brillenvorhänger nach Anspruch 1, **dadurch gekennzeichnet**, daß die Halterung aus einer Lötverbindung besteht.

3. Brillenvorhänger nach Anspruch 1 oder 2, **dadurch gekennzeichnet**, daß die Klammern (5, 6; 9, 10) einseitig an den Aufsteckgläsern (2, 3) anliegende Auflagen (12, 18, 21) aufweisen, an denen die Aufsteckgläser (2, 3) befestigt sind.

4. Brillenvorhänger nach Anspruch 3, **dadurch gekennzeichnet**, daß die Auflagen (11, 21) mittels Schrauben (12, 22) an den Aufsteckgläsern (2, 3) befestigt sind.

5. Brillenvorhänger nach Anspruch 3, **dadurch gekennzeichnet**, daß die Auflagen mittels Nieten an den Aufsteckgläsern befestigt sind.

6. Brillenvorhänger nach Anspruch 3, **dadurch gekennzeichnet**, daß die Aufsteckgläser (2, 3) an den Auflagen angeklebt sind.

7. Brillenvorhänger nach einem der Ansprüche 3, bis 6, **dadurch gekennzeichnet**, daß die Auflagen (12, 18) an der Rückseite der Aufsteckgläser (2, 3) anliegen.

8. Brillenvorhänger nach einem der Ansprüche 3 bis 6, **dadurch gekennzeichnet**, daß die Auflagen an der Vorderseite der Aufsteckgläser anliegen.

9. Brillenvorhänger nach einem der Ansprüche 1 bis 8, **dadurch gekennzeichnet**, daß an den oberen Klammern (5, 6, 11, 17, 20) oberhalb der oberen Ränder Röhrchen (7, 8, 16) zur Aufnahme der Enden der Brücke (4) befestigt sind.

10. Brillenvorhänger nach Anspruch 9, **dadurch gekennzeichnet**, daß die Röhrchen (7, 8, 16) an den Klammern (5, 6, 11, 17, 20) angelötet sind.

11. Brillenvorhänger nach einem der Ansprüche 1 bis 10, **dadurch gekennzeichnet**, daß die Klammern (11, 17, 20) einwärtsgebogene, mit einem Kunststoffschlauch (15) überzogene Bügel (14) aufweisen.

12. Brillenvorhänger nach einem der Ansprüche 1 bis 11, **dadurch gekennzeichnet**, daß die Brücke (4) als bogenförmige Verbindung gestaltet ist.

## Claims

1. Clip-on spectacle accessory (1) with rimless clip-on lenses (2,3) which are each held by a number of clasps to the spectacle lenses, wherein an upper clasp (5,6,11,17,20) is directly secured to the top edge of each clip-on lens (2,3), which at the same time forms the holding means for an elastic bridge (4) to the other clip-on lens (2,3), such that the lateral cohesion of both clip-on lenses (2,3) is determined by the upper clasps (5,6,11,17,20) and the bridge (4), and a lower clasp (9,10) is directly secured to the lower edge of each clip-on lens (2,3) preventing the clip-on accessory from spreading-away from the lenses (2,3) of the spectacles, wherein the upper (5,6,11,17,20) and the lower clasp (9,10) of a clip-on lens (2,3) are outwardly off-set with respect to the center line of the clip-on lens (2,3),
**characterized in that**
the bridge (4) is formed from an elastic metal wire and ends at both ends within holders arranged at the top edge of the corresponding clasp (5,6,11,17,20).

2. Clip-on spectacle accessory according to claim 1,
**characterized in that**
the holder consists of a solder connection.

3. Clip-on spectacle accessory according to claim 1 or 2,
**characterized in that**
the clasps (5, 6; 9, 10) include rests (12, 18, 21) contacting the clip-on lenses (2, 3) on one side to which the clip-on lenses (2, 3) being mounted.

4. Clip-on spectacle accessory according to claim 3,
**characterized in that**
the rests (11, 21) are mounted to the clip-on lenses (2, 3) by means of screws (12, 21).

5. Clip-on spectacle accessory according to claim 3,
**characterized in that**
the rests are mounted to the clip-on lenses my means of rivets.

6. Clip-on spectacle accessory according to claim 3,
**characterized in that**
the clip-on lenses (2, 3) are glued to the rests.

7. Clip-on spectacle accessory according to any of the claims 3 - 6,
**characterized in that**
the rests (12, 18) contact the clip-on lenses (2, 3) on their rear side.

8. Clip-on spectacle accessory according to any of the claims 3 - 6,
**characterized in that**
the rests contact the clip-on lenses on the front side.

9. Clip-on spectacle accessory according to any of the claims 1 - 8,
**characterized in that**
tubes (7, 8, 16) for holding the ends of the bridge (4) are mounted to the upper clasps (5, 6, 11, 17, 20) above the upper edges.

10. Clip-on spectacle accessory according to claim 9,
**characterized in that**
the tubes (7, 8, 16) are soldered to the clasps (5, 6, 11, 17, 20).

11. Clip-on spectacle accessory according to any of the claims 1 - 10,
**characterized in that**
the clasps (11, 17, 20) comprise inwardly bent clamps (14) coated with a plastic tube (15).

12. Clip-on spectacle accessory according to any of the claims 1 - 11,
**characterized in that**
the bridge (4) is arranged as an arch-shaped connection.

## Revendications

1. Ensemble rapporté (1) de faces supplémentaires pour lunettes comportant des verres rapportés (2,3) sans bord, qui sont retenus par plusieurs attaches sur le verre de lunette, dans lequel pour chaque verre rapporté (2,3), directement sur le bord supérieur de ce verre, est fixée une attache supérieure (5,6,11,17,20), qui forme simultanément le support pour un pont élastique (4) pour l'autre verre rapporté (2,3) de telle sorte que le maintien latéral à l'état assemblé des deux verres rapportés (2,3) est déterminé par l'intermédiaire des attaches supérieures (5,6,11,17,20) et le pont (4), et que directement sur le bord inférieur de chaque verre rapporté (2,3) est fixée une attache inférieure (9,10), qui empêche un écartement de l'ensemble de faces supplémentaires pour lunettes à partir des verres de lunettes (2,3), l'attache supérieure (5,6,11,17,20) et l'attache inférieure (9,10) d'un verre rapporté (2,3) étant respectivement décalées vers l'extérieur en direction de l'axe central du verre rapporté (2,3), caractérisé en ce que le pont (4) est formé d'un fil métallique élastique et se termine, par ses extrémités, respectivement dans un dispositif de retenue situé sur le bord supérieur de l'attache considérée (5,6,11,17,20).

2. Ensemble de faces supplémentaires pour lunettes selon la revendication 1, caractérisé en ce que le dispositif de retenue est constitué par une liaison brasée.

3. Ensemble de faces supplémentaires pour lunettes selon la revendication 1 ou 2, caractérisé en ce que les attaches (5,6; 9,10) comportent des supports (12,18,21), qui s'appliquent sur une face contre les verres rapportés (2,3) et auxquels les verres (2,3) sont fixés.

4. Ensemble de faces supplémentaires pour lunettes selon la revendication 3, caractérisé en ce que les supports (11,21) sont fixés aux verres rapportés (2,3) à l'aide de vis (12,22).

5. Ensemble de faces supplémentaires pour lunettes selon la revendication 3, caractérisé en ce que le supports sont fixés aux verres rapportés au moyen de rivets sur les verres rapportés.

6. Ensemble de faces supplémentaires pour lunettes selon la revendication 3, caractérisé en ce que les verres rapportés (2,3) sont collés sur les supports.

7. Ensemble de faces supplémentaires pour lunettes selon l'une des revendications 3 à 6, caractérisé en ce que les supports (12,18) s'appliquent contre la face arrière des verres rapportés (2,3).

8. Ensemble de faces supplémentaires pour lunettes selon l'une des revendications 3 à 6, caractérisé en ce que les supports s'appliquent sur la face avant des verres rapportés.

9. Ensemble de faces supplémentaires pour lunettes selon l'une des revendications i à 8, caractérisé en ce que des petits tubes (7,8,16) servant à loger les extrémités du pont (4) sont fixés sur les attaches supérieures (5,6,11,17,20) au-dessus des bords supérieurs.

10. Ensemble de faces supplémentaires pour lunettes selon la revendication 9, caractérisé en ce que les petits tubes (7,8,16) sont fixés par brasage aux attaches (5,6,11,17,20).

11. Ensemble de faces supplémentaires pour lunettes selon l'une des revendications 1 à 10, caractérisé en ce que les attaches (11,17,20) possèdent des étriers (14) coudés vers l'intérieur et recouverts d'un tuyau en matière plastique (15).

12. Ensemble de faces supplémentaires pour lunettes selon l'une des revendications 1 à 11, caractérisé en ce que le pont est agencé sous la forme d'une liaison de forme arquée.
